(19) Europäisches Patentamt / European Patent Office / Office européen des brevets

(11) **EP 4 449 074 B1**

(12) **FASCICULE DE BREVET EUROPEEN**

(45) Date de publication et mention de la délivrance du brevet:
**08.10.2025 Bulletin 2025/41**

(21) Numéro de dépôt: **22835762.0**

(22) Date de dépôt: **14.12.2022**

(51) Classification Internationale des Brevets (IPC):
*G01G 19/58* *(2006.01)*

(52) Classification Coopérative des Brevets (CPC):
**G01G 19/58**

(86) Numéro de dépôt international:
**PCT/EP2022/085757**

(87) Numéro de publication internationale:
**WO 2023/110965 (22.06.2023 Gazette 2023/25)**

(54) **CONTENANT INTEGRANT DES MOYENS DE MESURE DE SA MASSE ET DE SON CONTENU**

BEHÄLTER MIT EINGEBAUTEN MITTELN ZUR MESSUNG SEINER MASSE UND SEINES INHALTS

CONTAINER INCORPORATING MEANS FOR MEASURING ITS MASS AND CONTENTS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **17.12.2021 FR 2113906**

(43) Date de publication de la demande:
**23.10.2024 Bulletin 2024/43**

(73) Titulaire: **PA.COTTE SA**
**1009 Pully (CH)**

(72) Inventeurs:
• **VIOT, Ambroise**
**44000 NANTES (FR)**
• **LECLERCQ, Edouard**
**49000 ANGERS (FR)**
• **POREZ, Mathieu**
**44300 Nantes (FR)**

(74) Mandataire: **reuteler & cie SA**
**Chemin de la Vuarpillière 29**
**1260 Nyon (CH)**

(56) Documents cités:
**EP-A2- 2 023 101**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Le domaine de l'invention est celui de la conception et de la fabrication de bagages et/ou de colis.
L'invention concerne plus particulièrement un contenant intégrant des moyens de mesure de sa masse et de son contenu.
Il est courant aujourd'hui de trouver dans des objets des moyens embarqués de pesée.
Dans le cas des emballages et plus particulièrement des emballages réutilisables, intelligents et connectés (c-à-d proposant des services de télémétrie et/ou de géolocalisation en sus de protéger/sécuriser un contenu pendant une livraison), l'usage d'un dispositif embarqué de pesée par les pieds ou la poignée, permet à un usager expéditeur de biens :

- de vérifier le poids du contenu de son emballage ;
- de requérir une prestation de livraison "au juste prix/poids/volume" auprès d'un coursier, et
- de certifier au destinataire, après fermeture et scellage de l'emballage, la présence du contenu dans celui-ci.

En ce qui concerne les bagages à main ou les valises, la littérature fait souvent référence à l'usage de tels dispositifs intégrés, dans le cas d'un accès à un moyen de transport, où le contrôle préalable de la masse du bagage est nécessaire à sa prise en charge.
Par exemple, dans le cas du transport aérien, ce dispositif intégré dans les roulettes ou la poignée permet à un passager, par la prise de connaissance du poids du bagage, de se conformer à la réglementation de la compagnie aérienne avant l'enregistrement du bagage.
Le document EP2023101A2 divulgue une balance a main avec une poignée et une unité de pesage.
Cependant, les dispositifs actuels de prise de poids, par leurs intégrations mécatroniques, ont les défauts et/ou les limitations décrites ci-après.
Dans le cas de solutions techniques à pied (comparables à celles utilisées dans les pèse-personnes), chaque prise de poids doit se faire sur un sol régulier et horizontal. Ces limitations sont imposées par le fait que les quatre pieds doivent être en contact avec le sol et que le plan défini par ces points de contact doit être orthogonal avec le vecteur gravité. En ce qui concerne les dispositifs à poignée, l'utilisateur doit s'assurer, lors de la prise de mesure, que le bagage est et reste à la verticale, immobile et suspendu quelques secondes. Il est important que la poignée, l'axe de rotation de la poignée où se trouve les jauges de mesure et le centre de masse du bagage soient alignés. A défaut de respecter ces conditions, nécessitant potentiellement une manipulation peu aisée du contenant, l'estimation du poids du contenant est faussée, au moins un tant soit peu.
Pour les dispositifs à poignée, selon la répartition du contenu dans l'emballage ou le bagage, la condition d'alignement peut ne pas être satisfaite et la mesure faussée de quelques pourcentages. A titre d'exemple, il est noté que, lors de la prise de mesure, 10° d'angle du bagage par rapport à la verticale engendrera une erreur de 2,5% sur l'estimation du poids du contenu.
Aussi, pour la majorité des modes de réalisation proposés, la poignée pesante est positionnée selon un axe vertical passant par le centre géométrique du bagage. Cette position optimale de la poignée est celle qui minimise l'effet de l'angle gîte du bagage sur la mesure. Cependant, une telle intégration n'est pas toujours possible.
Pour les solutions précédemment évoquées, il est important de protéger de toutes contraintes parasites les éléments de mesure (c-à-d les jauges de contraintes) du dispositif (par ajout de degrés de liberté de liaison) afin de prévenir toutes défaillances. En effet, seuls des efforts de traction et/ou de compression doivent traverser ces jauges. Selon les modes de réalisation existants, les jauges peuvent subir des contraintes de cisaillement qui peuvent être destructives. Par exemple, dans le cas des roulettes pesantes, la friction de celles-ci sur le sol quand le bagage est tracté sollicite les éléments de mesure. Aussi, dans le cas d'une poignée pesante assemblée de manière rigide sur un bagage, c-à-d sans axe de rotation entre ce dernier et la poignée, un angle d'inclinaison du bagage (généré par un mauvais équilibrage du bagage) dégraderait les éléments de mesure.
Enfin, pour que la mesure du poids soit précise et comme évoqué ci-dessus, le bagage doit être immobile lors de la prise de mesure de poids. Via ses points d'appui avec le sol, un bagage sur pieds de pesée sera stable et la mesure précise alors qu'un bagage équipé d'une poignée pesante sera affecté par les oscillations naturelles de la masse suspendue comme un pendule dans la gravité ce qui affecterait la précision de mesure du dispositif.
L'invention a notamment pour objectif de répondre à ce besoin.
Plus précisément, l'invention a pour objectif de proposer un contenant intégrant des moyens de mesure de sa masse qui est capable de fournir une mesure relativement précise par le biais d'une manipulation aisée à réaliser par son utilisateur.
L'invention a également pour objectif de fournir un tel contenant avec une intégration robuste des moyens de mesure du poids.
L'invention a encore pour objet de fournir un tel contenant dont la mesure de sa masse n'est pas ou peu impactée par un défaut d'immobilité du contenant lors de la prise de mesure.
Ces objectifs, ainsi que d'autres qui apparaîtront par la suite, sont atteints grâce à l'invention qui a pour objet un contenant comprenant :

- une poignée montée sur une face supérieure du contenant par l'intermédiaire d'une liaison pivot ;
- des moyens de mesure de la masse du contenant et de son contenu,

caractérisé en ce que les moyens de mesure comportent :

- une jauge de contrainte intercalée entre la face supérieure et la liaison pivot, la jauge de contrainte étant conçue pour mesurer une force de traction selon un axe de mesure s'étendant perpendiculairement à la face supérieure ;
- un inclinomètre conçu pour mesurer une inclinaison de l'axe de mesure par rapport à une direction verticale ;
- une unité de traitement électronique destinée à estimer la masse du contenant et de son contenu lors d'une suspension du contenant par sa poignée, l'unité de traitement éléctronique étant configurée pour corriger une force mesurée par la jauge de contrainte avec une inclinaison mesurée par l'inclinomètre.

Le contenant selon l'invention présente la capacité de mesurer sa masse et celle de son contenu lorsqu'il est soulevé par une personne par l'intermédiaire de la poignée.

La manipulation réalisée pour mesurer la masse du contenant et de son contenu est particulièrement aisée à réaliser. En effet, il suffit juste à l'utilisateur de soulever le contenant par sa poignée.

La mesure réalisée par les moyens de mesure du contenant selon l'invention est relativement précise par rapport aux techniques selon l'art antérieur. En effet, grâce au fait que la poignée est montée pivotante sur le contenant, alors, lors de la suspension du contenant par sa poignée, le contenant s'incline par rapport à la poignée en fonction de son centre de gravité et du vecteur gravité. L'inclinomètre permet alors de mesurer l'angle d'inclinaison adopté par l'axe de mesure vis-à-vis de la direction verticale, lors de la mesure de la masse. De cette manière, la mesure de masse peut être ajustée par le biais de l'inclinaison mesurée. L'estimation de la masse du contenant et de son contenu est ainsi plus précise qu'une estimation menée sans intégration de l'inclinaison de l'axe de mesure.

Selon la conception de l'invention, la jauge de contrainte est intercalée entre la face supérieure du contenant et la liaison pivot. De cette manière, la jauge de contrainte présente une intégration robuste susceptible de résister à des chocs et à des manipulations successives.

En effet, si la jauge de contrainte avait été intercalée entre la poignée et la liaison pivot, alors une connectique entre la jauge de contrainte et l'unité de traitement électronique, passant alors au travers de la liaison pivot, aurait été soumise à des contraintes particulièrement importantes, à même de dégrader la fiabilité dans le temps de la connectique.

Ainsi, l'intégration robuste des moyens de mesure de la masse du contenant et de son contenu est compensée par le fait que le contenant selon l'invention permet de mesurer l'inclinaison entre l'axe de mesure qui s'étend perpendiculairement à la face supérieure du contenant et une direction verticale lorsque le contenant est suspendu par sa poignée.

Il est également à noter que l'intégration d'une jauge de contrainte à proximité de la poignée, et non à proximité de piètements du contenant, permet la mesure de la masse du contenant et de son contenu en pratiquement toutes circonstances, et ce même lorsque la surface du sol est irrégulière, ce qui aurait entraîné des défauts d'estimation de la masse du contenant et de son contenu si des jauges de contrainte avaient été intégrées dans les piètements du contenant.

Selon une caractéristique avantageuse, l'unité de traitement électronique met en œuvre la formule suivante pour estimer la masse du contenant et de son contenu :

$$M = f / (g \times \cos(\text{alpha}))$$

dans laquelle :

- M est la masse du contenant et de son contenu ;
- f est l'intensité en Newton de la force mesurée par la jauge de contrainte ;
- g est la constante de gravité ;
- alpha est un angle mesuré par l'inclinomètre.

La formule mise en œuvre par l'unité de traitement électronique permet de compenser de manière simple et prédictible la masse du contenant et de son contenu mesurée par la jauge de contrainte avec l'inclinaison de l'axe de mesure par rapport à la direction verticale.

Avantageusement, l'inclinomètre est formé par un accéléromètre, notamment du type microsystème électromécanique désigné par l'acronyme anglais MEMS.

Un accéléromètre permet de déterminer précisément l'inclinaison de l'axe de mesure par rapport à une direction verticale physiquement matérialisée par la pesanteur. De plus, un accéléromètre est un composant aisé à se procurer et à intégrer dans une électronique embarquée dans un contenant.

Selon une solution préférée, l'unité de traitement électronique comprend des moyens de filtrage de perturbations de la mesure de la force de traction mesurée par la jauge de contrainte issus d'une oscillation du contenant.

De cette manière, il est compensé les oscillations naturelles du contenant lorsqu'il est suspendu par sa poignée.

Préférentiellement, les moyens de filtrage comprennent un filtre passe bas.

Un filtre passe bas permet de rejeter aisément les variations de la masse mesurée issues de l'oscillation naturelle du contenant suspendu.

L'accéléromètre est avantageusement utilisé pour déterminer la fréquence d'oscillation du contenant lors de sa suspension par sa poignée.

Selon un mode de réalisation avantageux, le contenant délimite une cavité de stockage et comprend des moyens de calage conçus pour tendre à caler un objet dans une position prédéterminée dans la cavité de stockage.

Grâce aux moyens de calage, un objet situé à l'intérieur de la cavité de stockage est maintenu immobile, ou tend à être maintenu immobile, dans la cavité de stockage, ce qui limite des perturbations de positionnement du centre de gravité du contenant lorsqu'il est suspendu par sa poignée. De plus, grâce au calage de l'objet dans sa position prédéterminée, la position approximative du centre de gravité est connue vis-à-vis du contenant et ainsi vis-à-vis de la poignée du contenant.

Avantageusement, le contenant comprend des moyens de communication à courte distance et/ou à longue distance couplés à l'unité de traitement électronique, les moyens de communication étant aptes à permettre un transfert de données entre l'unité de traitement électronique et un serveur informatique distant et/ou un dispositif électronique.

Un tel dispositif électronique peut par exemple correspondre à un ordiphone.

Grâce à de tels moyens de communication, l'unité de traitement électronique peut communiquer, à un dispositif électronique ou à un serveur informatique distant, la masse estimée du contenant.

Il peut également être envisagé que l'unité de traitement électronique soit questionnée par le serveur informatique distant et/ou par le dispositif électronique pour que l'unité de traitement électronique déclenche une estimation de la masse du contenant et de son contenu et la transmission de cette masse.

Avantageusement, le contenant comprend un afficheur couplé à l'unité de traitement électronique et configuré pour afficher au moins la masse du contenant et de son contenu estimée par l'unité de traitement électronique.

Un tel afficheur est avantageux en ce qu'il permet d'afficher la masse estimée du contenant. De cette manière, l'utilisateur peut prendre directement connaissance de la masse de son contenant après l'avoir soulevé par le biais de sa poignée.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :

- [Fig. 1] la figure 1 est une représentation schématique d'un contenant selon l'invention reposant sur une surface par le biais de ses pieds, le contenant intégrant dans une cavité de stockage un objet, et présentant une poignée faisant saillie d'une face supérieure du contenant ;

- [Fig. 2] la figure 2 est une représentation schématique du contenant de la figure 1 suspendu par le biais de sa poignée ;

- [Fig. 3] la figure 3 est une représentation schématique selon une vue en perspective de dessus du contenant selon l'invention ;

- [Fig. 4] la figure 4 est une représentation schématique de composants électroniques du contenant selon l'invention.

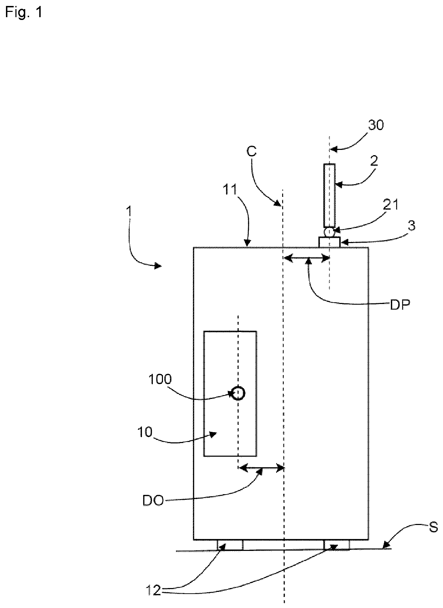

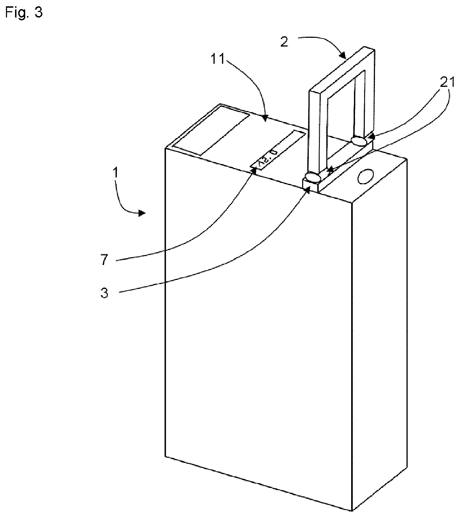

En référence aux figures 1 à 3, un contenant 1 selon l'invention est représenté.

Le contenant 1 présente une face supérieure 11.

Plus spécifiquement, le contenant 1 prend la forme d'une caisse.

Selon le présent mode de réalisation, la caisse est parallélépipédique rectangle.

Cette caisse comprend un panneau supérieur, quatre panneaux latéraux et un panneau inférieur. La face supérieure 11 du contenant 1 est formée par le panneau supérieur.

Le contenant 1 selon l'invention comprend également une poignée 2. Cette poignée 2 est montée sur la face supérieure 11 du contenant 1 par l'intermédiaire d'une liaison pivot 21.

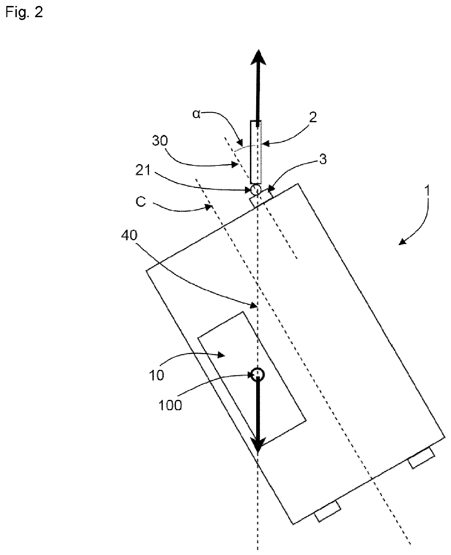

La poignée 2 permet de soulever le contenant 1 tel que cela est illustré par la figure 2.

En référence à la figure 1, le contenant 1 repose sur un sol S par le biais de piètements 12.

Un plan central C est schématiquement représenté sur la figure 1, ce plan central C partage le contenant 1 en deux parties égales.

Tel que cela est illustré par cette figure, la poignée 2 est décalée latéralement sur la face supérieur 11 par rapport à l'axe central C selon un décalage DP.

Selon le présent mode de réalisation, le contenant 1 délimite une cavité de stockage.

Cette cavité de stockage permet au contenant 1 de transporter un objet 10.

Toujours selon le présent mode de réalisation, le contenant 1 comprend des moyens de calage (non représentés). Ces moyens de calage sont conçus pour maintenir un objet 10 en position prédéterminée dans la cavité de stockage.

Ces moyens de calage peuvent par exemple correspondre à des sangles élastiques conçues pour enserrer l'objet 10 et le plaquer contre l'une des parois du contenant 1, plus précisément sur une face interne de l'une des parois du contenant 1.

Les moyens de calage peuvent également correspondre à une plaque montée mobile à l'intérieur du contenant 1 et étant couplée au contenant 1 par le biais de liaisons élastiquement déformables tendant à rappeler la plaque en direction de l'une des parois du contenant 1.

De cette manière, un objet 10 intercalé entre la plaque et la paroi en direction de laquelle la plaque tend à être ramenée, est maintenu calé dans le contenant 1.

Tel que cela est illustré par la figure 1, en étant calé à l'intérieur du contenant 1, l'objet 10 et le contenant 1 forment un ensemble présentant un centre de gravité 100.

Le centre de gravité se trouve décalé par rapport à l'axe central C, et le long d'une direction parallèle à la face supérieure 11, selon un décalage DO.

Quand le contenant 1 est suspendu par le biais de sa poignée tel que cela est illustré par la figure 2, alors la poignée et le centre de gravité 100 s'alignent selon une direction verticale 40.

La position de la poignée 2 sur la face supérieure 11 et les moyens de calage sont configurés de manière à ce que la poignée 2 et le centre de gravité 100 tendent à être situés de part et d'autre de l'ace central C.

Selon le principe de l'invention, le contenant 1 comprend également des moyens de mesure de la masse du contenant 1 et de son contenu.

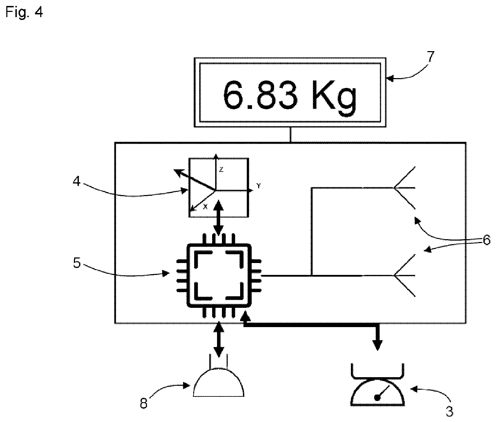

En référence plus spécifiquement à la figure 4, ces moyens de mesure comportent :

- une jauge de contrainte 3 ;
- un inclinomètre 4 ;
- une unité de traitement 5 électronique couplée à la jauge de contrainte 3 et à l'inclinomètre 4.

En référence aux figures 1 à 4, la jauge de contrainte 3 est intercalée entre la face supérieure 11 et la liaison pivot 21. plus particulièrement, la jauge de contrainte 3 est montée fixe sur la face supérieure 11, et la liaison pivot 21 est montée sur la jauge de contrainte 3.

La jauge de contrainte 3 peut faire saillie de la face supérieure 11 ou bien être intégrée au sein d'une réservation présentée par la face supérieure 11.

Cette jauge de contrainte 3 est conçue pour mesurer une force de traction selon un axe de mesure 30 qui s'étend perpendiculairement à la face supérieure 11.

L'inclinomètre 4, quant à lui, est conçu pour mesurer une inclinaison de l'axe de mesure 30 par rapport à une direction verticale 40 (schématiquement représentée par la figure 2 et par la figure 4).

L'inclinomètre 4 est notamment conçu pour réaliser cette mesure de l'inclinaison lorsque le contenant 1 est suspendu par le biais de sa poignée 2 tel que cela est le cas sur la figure 2.

L'unité de traitement 5 électronique est destinée à estimer la masse du contenant 1 et de son contenu lors d'une suspension du contenant 1 par sa poignée 2. A cet effet, l'unité de traitement 5 électronique est configurée pour corriger une force mesurée par la jauge de contrainte 3 avec une inclinaison mesurée par l'inclinomètre 4.

Cette correction correspond à un calcul basé sur un signal de sortie (un signal électrique) de la jauge de contrainte 3 et des données issues de l'inclinomètre 4.

L'unité de traitement 5 met en oeuvre la formule suivante pour estimer la masse du contenant 1 et de son contenu :

$$M = f / (g \times \cos(\alpha))$$

dans laquelle :

- M est la masse du contenant 1 et de son contenu ;
- f est l'intensité en Newton de la force mesurée par la jauge de contrainte 3 ;
- g est la constante de gravité ;
- $\alpha$ est un angle mesuré par l'inclinomètre 4.

Selon le présent mode de réalisation, l'inclinomètre 4 est un accéléromètre. Il s'agit notamment d'un accéléromètre à trois axes.

Toujours selon le présent mode de réalisation, l'unité de traitement 5 électronique comprend des moyens de filtrage de perturbations de la mesure de la force de traction mesurée par la jauge de contrainte 3, les perturbations étant issues d'une oscillation du contenant 1.

Ces moyens de filtrage comprennent notamment un filtre dit « passe bas ».

Ce filtrage est réalisé de manière numérique. Par exemple, le filtrage numérique peut être réalisé par le biais d'une moyenne glissante.

En référence à la figure 4, le contenant 1 peut également comprendre :

- des moyens de communication 6 à courte distance et/ou à longue distance ;
- un afficheur 7 ;
- un avertisseur sonore 8.

Les moyens de communication 6 peuvent être du type à courte distance (par exemple mettant en oeuvre un protocole de communication dont la distance de communication est inférieure à 10 mètres) ou du type à longue distance (par exemple mettant en oeuvre un protocole de communication identique ou similaire à ceux mis en œuvre pour les réseaux de téléphonie mobile).

Les moyens de communication 6, l'avertisseur sonore 8 et l'afficheur 7 sont chacun couplés à l'unité de traitement 5 électronique.

Les moyens de communication 6 sont conçus pour permettre un transfert de données entre l'unité de traitement 5 électronique, un serveur informatique distant et/ou un dispositif électronique.

Par dispositif électronique, il est par exemple entendu un ordinateur, un ordiphone, ou tout autre dispositif analogue.

L'afficheur 7 est quant à lui configuré pour afficher au moins la masse du contenant 1 et de son contenu préalablement estimé par l'unité de traitement 5 électronique.

L'avertisseur sonore 8 permet de communiquer à l'utilisateur des informations telles que le démarrage et la fin d'une pesée, ou bien encore le dépassement d'un poids limite préalablement renseigné.

Le contenant 1 précédemment décrit peut mettre en oeuvre le principe de fonctionnement décrit ci-après.

Dans un premier temps, un utilisateur demande, par l'intermédiaire d'un bouton porté par une surface du contenant 1, ou par le biais d'une application mobile exécutée sur un ordiphone et connecté de manière sécurisée au contenant 1, la mesure de la masse du contenant 1 et de son contenu.

L'utilisateur saisit ensuite la poignée 2 du contenant 1 et la suspend à la verticale le contenant 1.

Cette action peut être requise à l'utilisateur par exemple par le biais de l'afficheur 7 ou par le biais de l'écran de son ordiphone accompagné par exemple d'un signal sonore émis par l'avertisseur sonore.

Par la suite, l'unité de traitement 5 électronique questionne à intervalles de temps régulier la jauge de contrainte 3 de manière à détecter si le contenant 1 est suspendu.

Une fois cette condition atteinte, la mesure et l'estimation de la masse du contenant 1 et de son contenu débute.

L'unité de traitement 5 électronique collecte alors à une fréquence d'échantillonnage donné et selon une période fixée, des mesures d'accélération obtenues par l'accéléromètre trois axes, afin d'estimer l'inclinaison du contenant 1, et la mesure de l'effort linéaire entre la poignée et la caisse au travers de la jauge de contrainte 3.

L'unité de traitement 5 électronique, par le biais des moyens de filtrage de perturbation de la mesure de la force de traction, applique alors le filtre passe bas afin de rejeter les données de mesure correspondant à l'oscillation naturelle du contenant 1 suspendu.

Enfin, à l'aide de la formule décrite précédemment, l'unité de traitement 5 détermine la masse du contenant et de son contenu en corrigeant la mesure de la masse réalisée avec l'inclinaison de l'axe de mesure 30 par rapport à la direction verticale 40.

Une fois cette mesure réalisée, l'utilisateur peut être invité à reposer le contenant 1, par exemple par le biais d'une indication visuelle sur l'afficheur 7, ou par le biais d'un signal sonore émis par l'avertisseur sonore 8.

La masse estimée peut enfin être affichée soit sur l'afficheur 7 ou bien être affichée sur l'écran de l'ordiphone de l'utilisateur, ou encore être transmise à un serveur distant par le biais des moyens de communication 6.

Le contenant 1 selon l'invention permet ainsi de connaître la masse du contenant 1 et de son contenu de manière précise par rapport aux solutions selon l'art antérieur, cela en mettant en oeuvre une conception robuste et en permettant l'estimation de la masse par le biais d'une procédure simple à mettre en oeuvre en toutes conditions par l'utilisateur (suspension d'un contenant 1 par son utilisateur).

## Revendications

1. Contenant (1) comprenant :

   - une poignée (2) montée sur une face supérieure (11) du contenant (1) par l'intermédiaire d'une liaison pivot (21), la liaison pivot autorisant une inclinaison du contenant (1) par rapport à la poignée (2) en fonction d'un centre de gravité du contenant (1) et d'un vecteur gravité ;
   - des moyens de mesure de la masse du contenant (1) et de son contenu,
   les moyens de mesure comportant :

      - une jauge de contrainte (3) intercalée entre la face supérieure (11) et la liaison pivot (21), la jauge de contrainte (3) étant conçue pour mesurer une force de traction selon un axe de mesure (30) s'étendant perpendiculairement à la face supérieure (11) ;
      - un inclinomètre (4) conçu pour mesurer une inclinaison de l'axe de mesure (30) par rapport à une direction verticale (40) ;
      - une unité de traitement (5) électronique destinée à estimer la masse du contenant (1) et de son contenu lors d'une suspension du contenant (1) par sa poignée (2), l'unité de traitement (5) électronique étant configurée pour corriger une force mesurée par la jauge de contrainte (3) avec une inclinaison mesurée par l'inclinomètre (4),

   **caractérisé en ce que** l'unité de traitement (5) électronique comprend des moyens de filtrage de perturbations de la mesure de la force de traction mesurée par la jauge de contrainte (3) issues d'une oscillation du contenant (1).

2. Contenant (1) selon la revendication précédente, **caractérisé en ce que** l'unité de traitement (5) électronique met en œuvre la formule suivante pour estimer la masse du contenant (1) et de son contenu :

$$M = f / (g \times \cos(\alpha))$$

   dans laquelle :

   - M est la masse du contenant (1) et de son contenu ;
   - f est l'intensité en Newton de la force mesurée par la jauge de contrainte (3) ;
   - g est la constante de gravité ;
   - $\alpha$ est un angle mesuré par l'inclinomètre (4).

**3.** Contenant (1) selon l'une quelconque des revendications précédentes, **caractérisé en ce que** l'inclinomètre (4) est formé par un accéléromètre.

**4.** Contenant (1) selon l'une quelconque des revendications précédentes, **caractérisé en ce que** les moyens de filtrage comprennent un filtre passe bas.

**5.** Contenant (1) selon l'une quelconque des revendications précédentes, **caractérisé en ce que** le contenant (1) délimite une cavité de stockage et comprend des moyens de calage conçus pour tendre à caler un objet (10) dans une position prédéterminée dans la cavité de stockage.

**6.** Contenant (1) selon l'une quelconque des revendications précédentes, **caractérisé en ce qu'**il comprend des moyens de communication (6) à courte distance et/ou à longue distance couplés à l'unité de traitement (5) électronique, les moyens de communication (6) étant aptes à permettre un transfert de données entre l'unité de traitement (5) électronique et un serveur informatique distant et/ou un dispositif électronique. (par exemple un ordiphone)

**7.** Contenant (1) selon l'une quelconque des revendications précédentes, **caractérisé en ce qu'**il comprend un afficheur (7) couplé à l'unité de traitement (5) électronique et configuré pour afficher au moins la masse du contenant (1) et de son contenu estimée par l'unité de traitement (5) électronique.

**Patentansprüche**

**1.** Behälter (1), umfassend:

- einen Griff (2), der über eine Schwenkverbindung (21) an einer Oberseite (11) des Behälters (1) angebracht ist, wobei die Schwenkverbindung eine Neigung des Behälters (1) relativ zum Griff (2) in Abhängigkeit von einem Schwerpunkt des Behälters (1) und einem Schwerkraftvektor gestattet;
- Mittel zum Messen der Masse des Behälters (1) und seines Inhalts,
wobei die Messmittel aufweisen:

- einen Dehnungsmesser (3), der zwischen der Oberseite (11) und der Schwenkverbindung (21) angeordnet ist, wobei der Dehnungsmesser (3) zum Messen einer Zugkraft gemäß einer Messachse (30) konzipiert ist, die sich senkrecht zur Oberseite (11) erstreckt;
- einen Neigungsmesser (4), der zum Messen einer Neigung der Messachse (30) relativ zu einer vertikalen Richtung (40) konzipiert ist;
- eine elektronische Verarbeitungseinheit (5), die zum Schätzen der Masse des Behälters (1) und seines Inhalts bestimmt ist, wenn der Behälter (1) an seinem Griff (2) aufgehängt ist, wobei die elektronische Verarbeitungseinheit (5) ausgelegt ist, um eine vom Dehnungsmesser (3) gemessene Kraft mit einer vom Neigungsmesser (4) gemessenen Neigung zu korrigieren,

**dadurch gekennzeichnet, dass** die elektronische Verarbeitungseinheit (5) Mittel zum Filtern von Störungen der vom Dehnungsmesser (3) gemessenen Zugkraft umfasst, die durch eine Schwingung des Behälters (1) verursacht werden.

**2.** Behälter (1) nach vorstehendem Anspruch, **dadurch gekennzeichnet, dass** die elektronische Verarbeitungseinheit (5) die folgende Formel zur Schätzung der Masse des Behälters (1) und seines Inhalts verwendet:

$$M = f / (g \times \cos(\alpha))$$

wobei:

- M die Masse des Behälters (1) und seines Inhalts ist;
- f die Stärke in Newton der vom Dehnungsmesser (3) gemessenen Kraft ist;
- g die Schwerkraftkonstante ist;
- $\alpha$ ein vom Neigungsmesser (4) gemessener Winkel ist.

**3.** Behälter (1) nach einem der vorstehenden Ansprüche, **dadurch gekennzeichnet, dass** der Neigungsmesser (4) von einem Beschleunigungsmesser gebildet ist.

**4.** Behälter (1) nach einem der vorstehenden Ansprüche, **dadurch gekennzeichnet, dass** die Filtermittel einen Tiefpassfilter umfassen.

**5.** Behälter (1) nach einem der vorstehenden Ansprüche, **dadurch gekennzeichnet, dass** der Behälter (1) einen Aufbewahrungsraum begrenzt und Feststellmittel umfasst, die zum Arretieren eines Gegenstands (10) in einer vorbestimmten Position im Aufbewahrungsraum konzipiert sind.

**6.** Behälter (1) nach einem der vorstehenden Ansprüche, **dadurch gekennzeichnet, dass** er Kurzstrecken- und/oder Langstrecken-Kommunikationsmittel (6) umfasst, die mit der elektronischen Verarbeitungseinheit (5) gekoppelt sind, wobei die Kommunikationsmittel (6) imstande sind, eine Datenübertragung zwischen der elektronischen Verarbeitungseinheit (5) und einem entfernten IT-Server und/oder einer elektronischen Vorrichtung (beispielsweise ein Smartphone) zu gestatten.

7. Behälter (1) nach einem der vorstehenden Ansprüche, **dadurch gekennzeichnet, dass** er eine Anzeige (7) umfasst, die mit der elektronischen Verarbeitungseinheit (5) gekoppelt und ausgelegt ist, um mindestens das von der elektronischen Verarbeitungseinheit (5) geschätzte Gewicht des Behälters (1) und seines Inhalts anzuzeigen.

## Claims

1. A container (1) comprising:

   - a handle (2) mounted on an upper face (11) of the container (1) via a pivot connection (21), the pivot connection allowing an inclination of the container (1) relative to the handle (2) as a function of a center of gravity of the container (1) and of a gravity vector;
   - means for measuring the mass of the container (1) and its contents,
   the measuring means including:

       - a strain gauge (3) interposed between the upper face (11) and the pivot connection (21), the strain gauge (3) being designed to measure a tensile force along a measurement axis (30) extending perpendicular to the upper face (11);
       - an inclinometer (4) designed to measure an inclination of the measurement axis (30) relative to a vertical direction (40) ;
       - an electronic processing unit (5) intended to estimate the mass of the container (1) and its contents when the container (1) is suspended from its handle (2), the electronic processing unit (5) being configured to correct a force measured by the strain gauge (3) with an inclination measured by the inclinometer (4),

       **characterized in that** the electronic processing unit (5) comprises means for filtering disturbances in the measurement of the tensile force measured by the strain gauge (3) that result from an oscillation of the container (1).

2. The container (1) according to the preceding claim, **characterized in that** the electronic processing unit (5) implements the following formula to estimate the mass of the container (1) and of its contents:

$$M = f \,/\, (g \times \cos(\alpha))$$

in which:

   - M is the mass of the container (1) and its contents;
   - f is the intensity in Newton of the force measured by the strain gauge (3);
   - g is the gravitational constant;
   - $\alpha$ is an angle measured by the inclinometer (4).

3. The container (1) according to any one of the preceding claims, **characterized in that** the inclinometer (4) is formed by an accelerometer.

4. The container (1) according to any one of the preceding claims, **characterized in that** the filtering means comprise a low-pass filter.

5. The container (1) according to any one of the preceding claims, **characterized in that** the container (1) delimits a storage cavity and comprises wedging means designed to tend to wedge an object (10) in a predetermined position in the storage cavity.

6. The container (1) according to any one of the preceding claims, **characterized in that** it comprises short-distance and/or long-distance communication means (6) coupled to the electronic processing unit (5), the communication means (6) being able to allow a transfer of data between the electronic processing unit (5) and a remote computer server and/or an electronic device (for example a Smartphone).

7. The container (1) according to any one of the preceding claims, **characterized in that** it comprises a display (7) coupled to the electronic processing unit (5) and configured to display at least the mass of the container (1) and its contents estimated by the electronic processing unit (5).

Fig. 1

Fig. 2

Fig. 3

Fig. 4

6.83 Kg

**EP 4 449 074 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2023101 A2